# EUROPEAN PATENT SPECIFICATION

(11) **EP 0 348 917 B1**
(45) Date of publication and mention of the grant of the patent: **16.03.1994**
(21) Application number: 89111711.1
(22) Date of filing: 27.06.1989
(51) Int. Cl.: C09K 3/14

(54) **Method for repairing a coating surface**
Verfahren zur Wiederherstellung einer Oberflächenbeschichtung
Méthode pour réparer une surface de revêtement

(30) Priority: 27.06.1988 JP 156843/88
(43) Date of publication of application: 03.01.1990
(73) Proprietor: Mazda Motor Corporation, Aki-gun Hiroshima-ken (JP)
(72) Inventor: Yamane, Takakazu, Aki-gun Hiroshima-ken (JP); Nakahama, Tadamitsu, Aki-gun Hiroshima-ken (JP); Tanimoto, Yoshio, Aki-gun Hiroshima-ken (JP)
(74) Representative: LOUIS, PÖHLAU, LOHRENTZ & SEGETH

(56) References cited:
- DE-A- 2 632 012
- FR-A- 2 480 663
- US-A- 4 537 604
- DERWENT FILE SUPPLIER WPIL, accession no. 86-079162 [12], Derwent Publications Ltd, London, GB; & JP-A-61 028 573

## Description

The present invention relates to a method for repairing the surface of a coating, having the features stated in the first part of claim 1.

Recently, as finish and gloss on the surface of a coating have been remarkably improved, a scrape or a scratch marked on the surface of a coating with a paint dark in color, such as black, brown and gray, is particularly striking. It is thus required that such a scrape or scratch marked on a coating surface of a vehicle be repaired by removing the coating at the site of the scrape or scratch and re-forming a coating surface that does not show the scrape or scratch and that looks substantially the same as the original coating surface.

Procedures of repairing a coating surface with scrapes or scratch usually comprise a paper rubbing step, a so-called compound rubbing step, and a finish rubbing step. In the paper rubbing step, wet rubbing papers are usually employed to remove by wet-rubbing portions of a coating surface where dirt adheres or where the paint fades or solidifies in a state showing drips or sags. The compound rubbing step comprises a rough rubbing and an intermediate rubbing with a cotton buff or a wool buff, using a compound including, for example, one as disclosed in JP-A 58,980/1980. The finish rubbing step is to finish the coating surface with a wool buff using a compound having particle sizes smaller than those of the compound used in the compound rubbing step.

It can be noted, however, that the conventional repairing method described hereinabove rather may mark smaller scrapes or scratches on a coating surface to be repaired, thus causing a fade by diffused reflection of light on the surface of the coating which has been rubbed. Accordingly, since it is difficult to recover a scraped or scratched coating surface to an original state, scrapes or scratches frequently are repaired by re-painting.

### SUMMARY OF THE INVENTION

Therefore, the present invention has the object to provide a method for repairing the surface of a coating, which can remove a scrape or scratch on the coating surface and recover the scraped or scratched coating surface to an original state causing no fade on a surface of the coating which is rubbed.

In order to achieve the object, the present invention proposes a method as claimed in claim 1.

### BRIEF DESCRIPTION OF THE DRAWINGS

Other objects, features and advantages of the present invention will become apparent in the course of the description of the preferred embodiments which follow in this specification when read or interpreted in light of the accompanying drawings, in which:
FIG. 1 is a graph showing characteristics showing a relation of a visual state (or a gloss at the angle of 20° ) on a coating surface vs. an average wave height in a wavelength area below 100 µm;
FIG. 2 is a diagram showing the manner of finish rubbing according to the present invention;
FIG. 3 is a graph showing characteristics exerting an influence of particle sizes of a compound upon an average wave height on coating surfaces subsequent to a polishing when compared with prior to polishing, when a urethane foam buff is used;
FIG. 4 is a graph showing characteristics exerting an influence of particle sizes of a compound upon an average wave height on coating surfaces subsequent to a polishing when compared with prior to polishing, when a cotton buff is used;
FIG. 5 is a graph showing characteristics exerting an influence of particle sizes of a compound upon an average wave height on coating surfaces subsequent to a polishing when compared with prior to polishing, when a wool buff is used;
FIG. 6 is a graph showing characteristics exerting an influence of kinds of buffs upon an average wave height on coating surfaces subsequent to a polishing when compared with prior to polishing;
FIG. 7 is a characteristic graph showing a relation of pressures created by pressing a buff on the coating surface with an average wave height on the coating surface subsequent to polishing; and a relation of the pressures with a rate of areas on which the compound is baked;
FIG. 8 is a characteristic graph showing a relation of Vickers hardness with an average wave height of the coating surface subsequent to polishing;
FIG. 9 is a characteristic graph showing a relation of particle sizes of the compound with an average wave height of the coating surface subsequent to polishing; and
FIG. 10 is a graph showing a number integrating distribution of particle sizes of the compound preferred to provide a normal coating film.

### DETAILED DESCRIPTION OF THE PREFERRED EMBODIMENTS

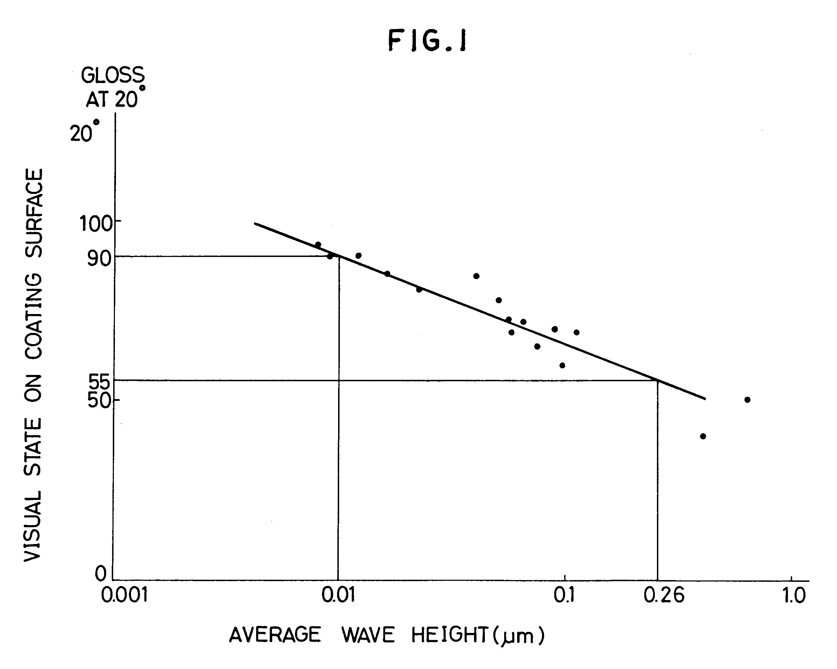

It has been found that there is an interrelation between an average wave height of a wavelength range below 100 µm and a visual observation for a gloss at the angle of 20° . More specifically, it has been found from the graph as shown in FIG. 1 that scrapes or scratches may be visually observed when the gloss at 20 ° is lower than 55, a range in which a paint fades after polishing may be visually observed when the gloss at 20 ° is in the range from 55 to 90, and a normal coating surface is visually observed when the gloss at 20° is higher than 90 - in other words, a normal coating has a surface with an average wave height being 0.01 µm in a range of wavelength of 100 µm or smaller. It has now been found that the gloss at 20° of more than 90 can be achieved by acting a compound having a Vickers hardness of Hv 2,000 kg/mm² or higher at a uniform surface pressure ranging from 2 to 20 g/cm² directly upon a coating surface in the step of finish rubbing.

In accordance with the present invention, the method for repairing the surface of a coating with scrapes or scratches comprises the finish rubbing step which is carried out by the so-called compound rubbing step comprising rough rubbing and intermediate rubbing. The compound rubbing step is usually carried out using a compound having a particle size larger than that of the compound to be used in the finish rubbing step according to the present invention. It is furthermore to be noted that the compound to be used in the intermediate rubbing has a particle size smaller than that to be used in the rough rubbing.

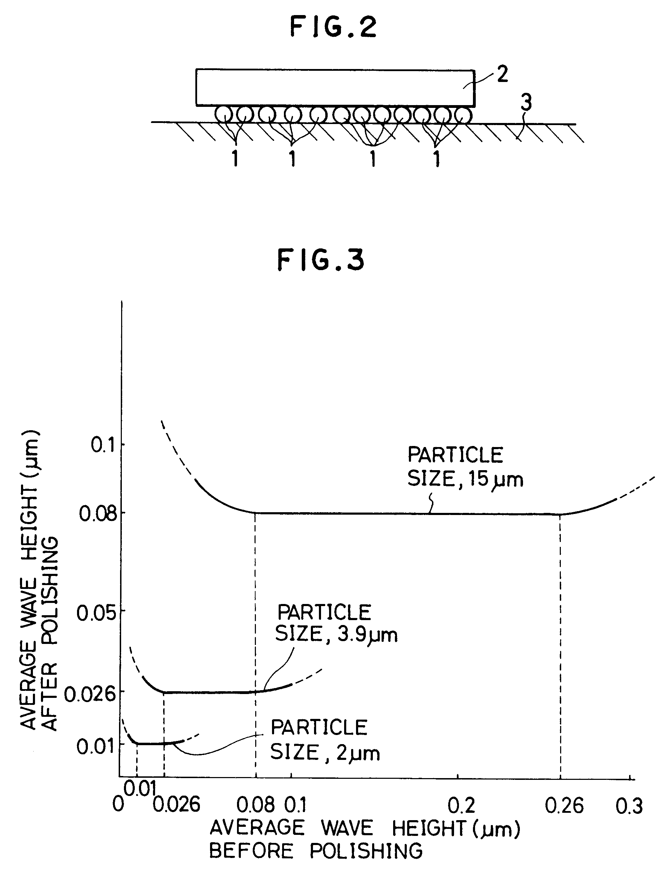

FIGS. 3 to 5 show the results experimentally obtained with respect to the relation of the average wave height below a wavelength of 100 µm before polishing with the average wave height therebelow after polishing, using a urethane foam buff, a cotton buff, and a wool buff, respectively. The results are shown to be substantially the same in the tendency. It is thus to be noted that a description is made which is restricted herein to the results obtained using the urethane foam buff, but it is to be understood that the present invention is considered in any respect as not restrictive thereto.

Referring now to FIG. 3 which shows the relation of the average wave heights on the surface of a coating polished with a urethane foam buff after polishing with that before polishing, it is found that, for the compound having particle sizes of 15 µm, an average wave height is in the range from approximately 0.26 to 0.08 µm prior to polishing, resulting in the average wave height on the polished surface to a uniform level as high as 0.08 µm, while the average wave height on the polished coating surface was somewhat larger than 0.08 µm when the compound was used having particle sizes larger than 0.26 µm or smaller than 0.08 µm. This means that, when the compound having particle sizes of 15 µm is used for polishing the coating surface having an average wave height in the range of approximately 0.26 to 0.08 µm, a limit for repairing the coating surface in a polishing time at the rate of 2 minutes per square meters is placed upon the average wave heighth of 0.08 µm subsequent to polishing, while the polishing time of 2 minutes per square meters is insufficient if an average wave height on the surface of a coating is larger than 0.26 µm, on the one hand, and the coating surface is scratched by the compound on the basis of their particle sizes when the average wave height on the coating surface prior to polishing is approximately 0.08 µm or lower. In this case, if the average wave height prior to polishing is lower than 0.08 µm, the use of the compound having the largest particle size of 15 µm poses no problems because their particle sizes are reduced to smaller sizes as the polishing proceeds.

When the compound is used having an average particle size of 3.9 µm, the average wave height after polishing on a surface of the coating becomes constant at 0.026 µm for the average wave height before polishing being in the range from approximately 0.08 to 0.026 µm, on the one hand, while the average wave height after polishing becomes somewhat larger than 0.026 µm when the average wave height before polishing is larger than approximately 0.08 µm or smaller than approximately 0.26 µm, on the other hand. When the compound is used having an average particle size of 2 µm, the average wave height after polishing becomes constant at 0.01 µ m for the average wave height before polishing in the range from 0.026 to 0.01 µm, while the average wave height after polishing becomes somewhat larger than 0.01 µm for the average wave height before polishing in the range larger than approximately 0.026 µm or in the range smaller than approximately 0.01 µm.

It is to be noted herein that characteristics lines may be produced by the urethane foam buff, which show the relation of the average wave height prior to polishing with that subsequent to polishing by plotting the constant average wave heights on the coating surface after polishing and the upper limits of the average wave heights before polishing which give the constant average wave heights for each of the particle sizes of the compounds.

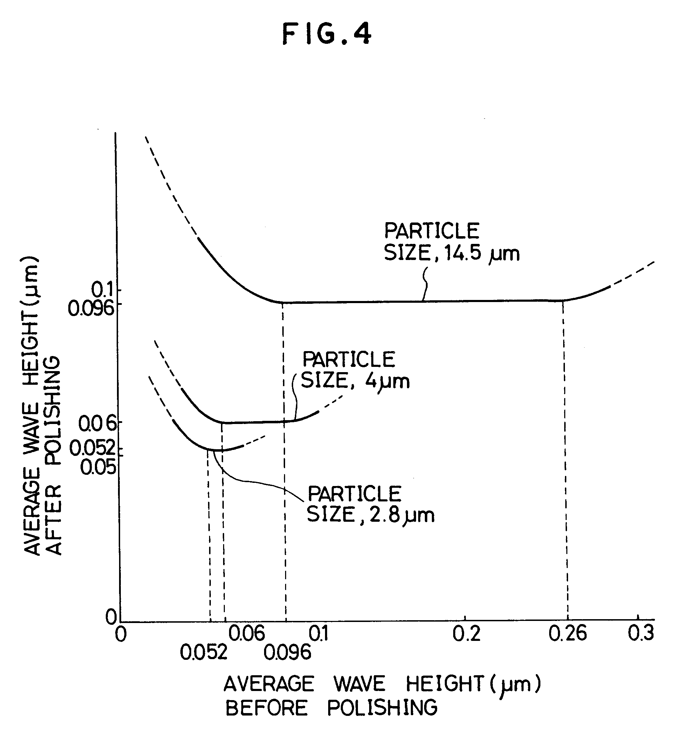

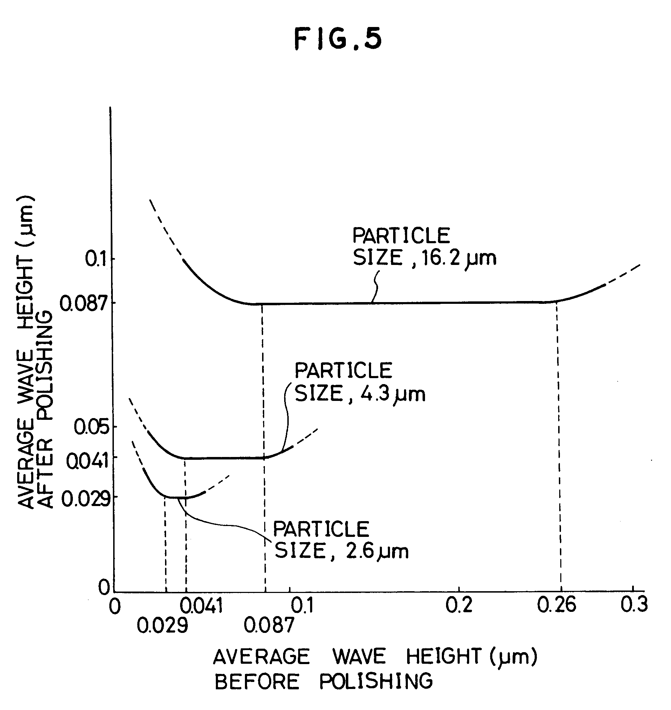

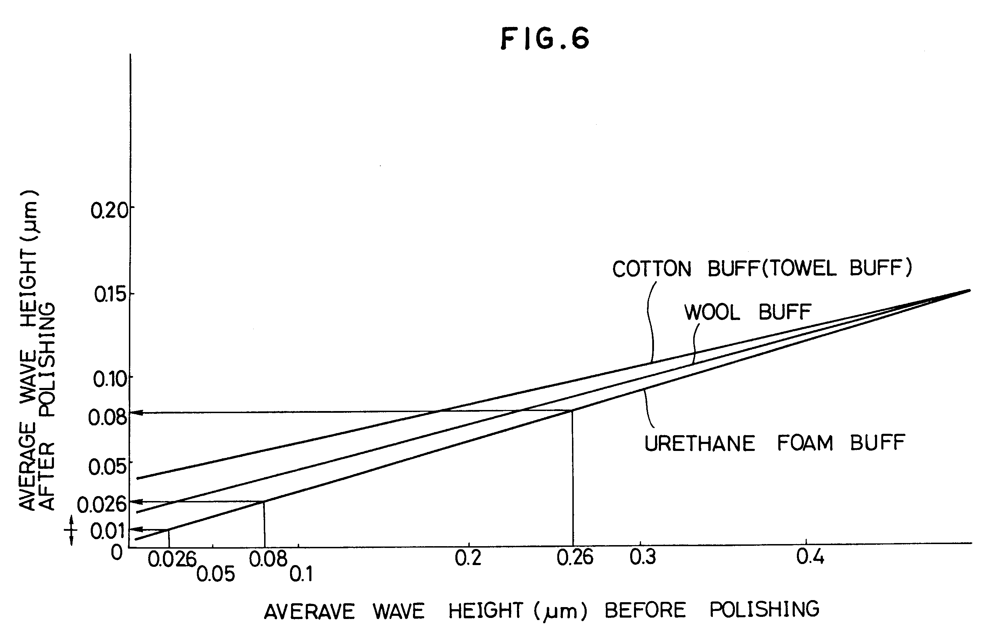

From the results as shown in FIG. 3, it is found that characteristics lines as shown in FIG. 6 showing the relation of the average wave height prior to polishing vs. subsequent to polishing using the urethane foam buff may be produced by plotting the constant average wave heights on the surface of a coating subsequent to polishing and the upper limits of the average wave heights prior to polishing which give the constant average wave heights for each of the particle sizes of the compounds. The characteristics lines for the cotton and wool buffs may be produced as shown in FIG. 6 in substantially the same manner as for the urethane foam buff, using the results produced as shown in FIGS. 4 and 5, respectively.

In the finish rubbing step, the compound is applied directly onto the surface of a coating in order to cut the surface thereof and rubbing a site of scrapes or scratches to a uniform surface of the coating. This action of the compound is not blocked by use of a buff because the compound is not rolled up in the material of the buff, such as cotton, wool or the like. Furthermore, the use of the buff does not permit an irregular repairing of the coating surface.

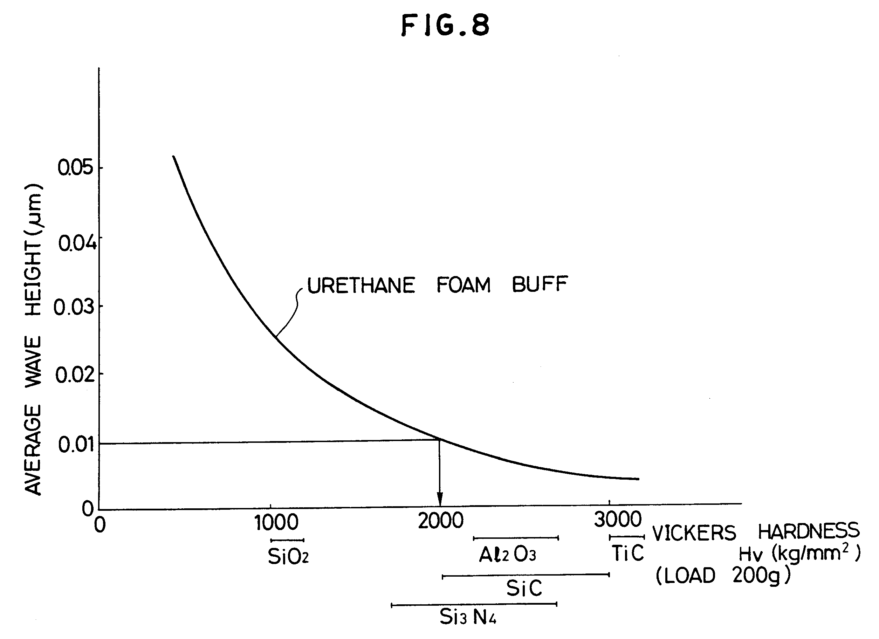

As shown in FIG. 8, the compound to be used for the present invention is not restricted to a particular one and it may preferably include, for example, an abrasive agent or a polishing agent, such as aluminum oxide, silicon nitride, silicon carbide, and titanium carbide, in a form of powder. It is preferred that the compound having a particle size ranging from 1 to 7 µm amounts to approximately 50% or more with respect to a total amount thereof.

The compound to be used therefor has a Vickers hardness of Hv 2,000 kg/mm² or higher. If the Vickers hardness of the compound is below the lower limit, the compound lacks the cutting capacity for cutting a coating surface until an average wave height of normal coatings reaches 0.01 µm. This is supported by the relation of the average wave height of coating film vs. a hardness of the compound as shown in FIG. 8. In FIG. 8, the procedures were the same as those shown in FIG. 3 where a distribution of particle sizes is represented as Dmed or D₅₀ = 1 to 7.5 µm while a maximum particle size is 15 µ m. FIG. 8 also shows the fact that the harder the compound, the smaller the average wave height on the coating after polishing. It is thus to be understood that the Vickers hardness of the compound of Hv=2,000 kg/mm² makes the average wave height of the coating film below 0.01 µm.

It is further preferred that the compound has a maximum particle size as large as approximately 15 µm. When workability is taken into consideration, it is preferred that a time required for polishing is set at 2 minutes per square meter of a coating surface to repair an average wave height of 0.26 µm, which is a surface of a most rough level that can be repaired by the finish rubbing procedure.

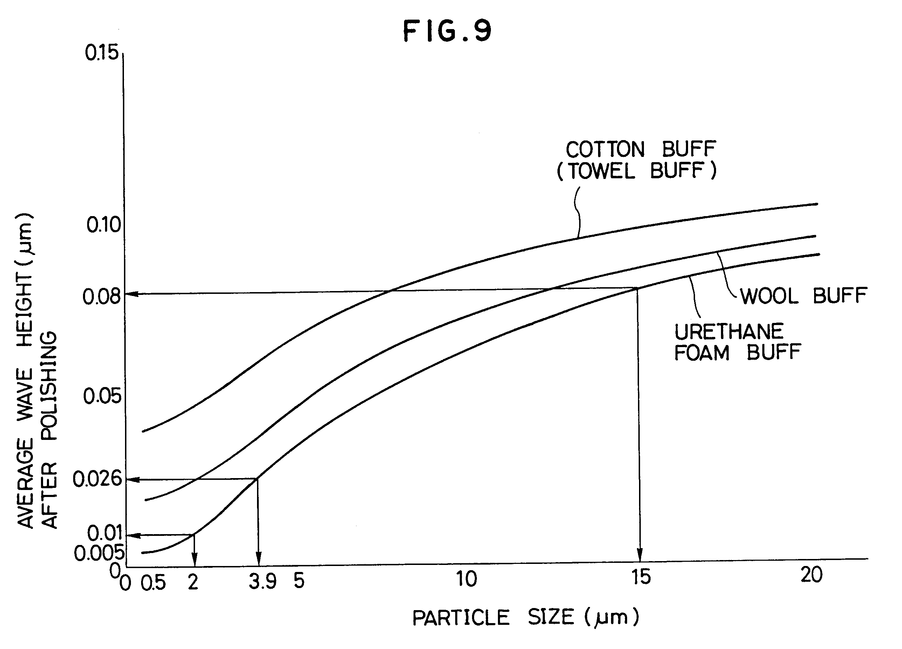

FIG. 9 shows the relation of the average wave height vs. particle sizes of the compound after polishing from the results as shown in FIGS. 3 to 5. As shown in FIG. 9, it is found that the largest particle size of the compound is required to be approximately 15 µm in order to repair a coating surface having the average wave height of approximately 0.26 µm in 2 minutes per square meter of the coating surface to an average wave height of about 0.08 µm after polishing.

It is to be understood, however, that the maximum particle size of the compound is not restricted to 15 µm and may vary to a wide extent because the largest size of 15 µm is determined on the basis of the polishing time of 2 minutes per square meter of the coating surface. In other words, the maximum particle size may be larger or smaller than 15 µm depending upon a polishing time to be set.

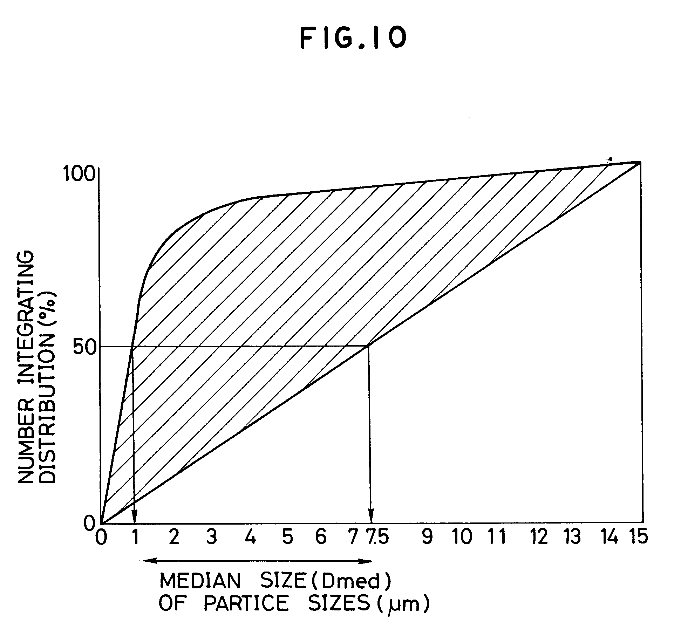

As shown in FIG. 10, it is preferred that a medium size, Dmed or D₅₀, of particle sizes of the compound be set within the range from 1 to 7.5 µm from the number integrating distribution on the basis of the fact that the maximum particle size of the compound is 15 µm.

In accordance with the present invention, the compound is then pressed using a particular buff at an equal surface pressure within the range from 2 to 20 g per square cm of the coating surface, thereby permitting the compound to cut out the coating surface to a desired average wave height on the coating surface.

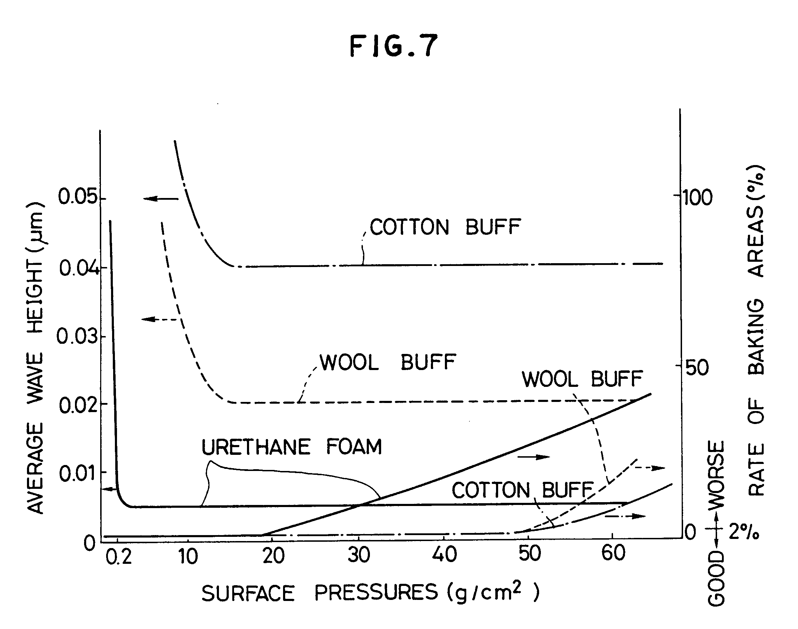

As shown in FIG. 7 where conditions were the same as in FIGS. 3 to 5 except surface pressures and where Dmed or D₅₀ = 1 to 7.5 and the maximum particle size is 15µ m, it is found that, as the surface pressures vary using a urethane foam buff, a finish on the coating surface is improved to a rapid extent at the surface pressure of around 2 g/cm² and that an average wave height can be reduced to 0.005 µm which is smaller than the average wave height of 0.01 µm on a normal coating surface. It is further to be noted that the average wave height of 0.005 µm can be maintained to substantially the same level as the surface pressure is elevated to higher pressures. However, if the surface pressure exceeds approximately 20 g/cm², it is found that an area in which the compound is baked on the coating film exceeds a rate of approximately 2% that is a limit for the acceptable area. It is thus to be noted that the optimum range of the surface pressure is from 2 to 20 g/cm².

Turning now to FIG. 7 showing influences of surface pressures applied by cotton and wool buffs for reference, it is found that they could not reduce the average wave heights to 0.01 µm or lower, which is an average wave height on a normal coating surface, by varying their pressures applied to the surface.

It is further to be noted that the surface pressures may be applied to the surface of a coating with a buff such as an urethane foam buff, a cotton buff and a wool buff, but the urethane foam buff is preferred.

As shown in FIG. 6, it is found that the urethane foam buff can provide an average wave height on the coating surface after polishing smaller than cotton and wool buffs and achieve a final average wave height of 0.01 µm or lower, while the cotton and wool buffs could not achieve the final average wave height lower than 0.01 µm, which is the average wave height on the normal coating surface as shown in FIG. 6.

The present invention may be applied to any kind of coatings and particularly suited for paints to be used for coating vehicle bodies. Such paints may include, for example, acrylic-melamine type clear, alkyd-melamine type solid, urethane type clear, urethane type solid and the like.

The present invention will be described by way of examples with reference to the accompanying drawings.

In the following example, the paper and compound rubbing steps were carried out under conventional conditions while the finish rubbing step was carried out in accordance with the method of the present invention.

In the paper rubbing step, dust as well as fades and sags of the paint were removed by wet rubbing using wet rubbing paper #1000 to #2000.

The compound rubbing step comprising the rough rubbing and intermediate rubbing was carried out using an air type disk polisher and an abrasive powder as the compound.

The rough rubbing was conducted using a rubbing compound ("#100"; Solar K.K.) as the compound for the polishing time at the rate of 2 minutes per square meter at revolutions of the disk ranging from 2,000 to 9,000 rpm. The composition containing the compound was as follows:

| Composition | Rates (%) |
|---|---|
| Compound (Al₂O₃) | 35 |
| Petroleum type solvent | 20 |
| Purified water | 35 |
| Surfactant | 10 |

The intermediate rubbing was effected using a rubbing compound ("UNICORN FMC-833S"; Ishihara Yakuhin K.K.) for the polishing time at the rate of 2 minutes per square meter at disk revolutions of 2,000 rpm. The composition used was as follows:

| Composition | Rates (%) |
|---|---|
| Compound (Al₂O₃) | 30 |
| Petroleum type solvent | 20 |
| Purified water | 40 |
| Surfactant | 10 |

The coating surface that had been treated by the intermediate rubbing step was then subjected to finish rubbing.

As shown in FIG. 2, the finish rubbing was effected by pressing the coating surface 3 through the compound 1 with the buff 2 as a pressing means, thus permitting the compound 1 alone to rub the coating surface 3. As the buff was used a urethane foam buff. The finish rubbing was conducted in which the surface 3 of a coating (alkyd-melamine; black in color) was polished using Al₂O₃ and an air type disk polisher. The composition containing the compound was as follows:

| Composition | Rates (%) |
|---|---|
| Compound (Al₂O₃) | 10 |
| Petroleum type solvent | 30 |
| Purified water | 59 |
| Surfactant | 1 |

It has been found that the structure as shown in FIG. 2 can press the coating surface 3 at equally constant pressures to thereby allow the compound 1 alone to act directly on the coating surface 3 without causing the buff 2 to act thereon, thus permitting cutting or repairing the coating surface to an average wave height as low as 0.01 µm, that is the one for a normal coating. This structure may prevent the compound 1 from being rolled in the buff 2 and as a consequence acting thereon in an irregular manner scratching the coating surface 3.

The results is shown in FIG. 3 where the finish rubbing on the surface of a coating with an alkyd-urethane solid paint was conducted by pressing the compound (Al₂O₃) having a Vickers hardness of Hv 2,300 kg/mm² with the urethane foam buff at the pressing pressure of 20 g/cm² for the polishing time of 2 minutes per m² of the coating surface and using the polisher at revolutions of 2,000 rpm. The results as shown in FIGS. 4 and 5 were likewise produced by means of the test procedures in the same manner as in FIG. 3 using the cotton buff and the wool buff, respectively.

As have been described hereinabove, the coating surface with scrapes and/or scratches can be repaired to a coating surface of high quality without causing any fade of a paint coated on a vehicle body.

## Claims

1. A method for repairing of an injured surface portion of the coating on a coated substrate, comprising rubbing the surface portion in a compound rubbing step with a powdery compound and in a finish rubbing step with a powdery compound whereof the particle size is smaller than that of the compound used in the compound rubbing step,
characterized in that the finish rubbing step is carried out using a powdery compound which has a Vickers hardness Hv of at least 2.000 kp/mm² and pressing said compound, during rubbing, onto said surface portion at a uniform surface pressure ranging from 2 to 20 p/cm².

2. A method as claimed in claim 1,
characterized in that the powdery compound used in the finish rubbing step has a maximum particle size of not more than 15µ, whereby at least 50 % or more of the total amount of the powdery material has an average particle size ranging from 1 to 7µ.

3. A method as claimed in claim 1 or 2,
characterized in that the powdery compound is an abrasive or polishing agent including aluminum oxide, silicon carbide, silicon nitride or titanium carbide.

4. A method as claimed in any of claims 1 to 3,
characterized in that said compound rubbing step comprises a first compound rubbing step and a second compound rubbing step, whereby the particle size of said powdery compound used in the first compound rubbing step is greater than the particle size of said powdery compound used in the second compound rubbing step.

5. A method as claimed in any of claims 1 to 4,
characterized in that the compound is pressed onto the surface portion with a buff.

6. A method as claimed in claim 5,
characterized in that the buff is a urethane foam buff.

7. A method as claimed in claim 5 or 6,
characterized in that in the finish rubbing step the compound is pressed onto the surface portion with a rotating buff.

8. A method as claimed in any of claims 1 to 7,
characterized in that the powdery material is contained in a liquid or pasty composition.

## Patentansprüche

1. Verfahren zur Ausbesserung eines beschädigten Flächenabschnitts der Beschichtung eines beschichteten Substrats, bei welchem der Flächenabschnitt in einem Vor-Schleifgang mit einer pulverförmigen Verbindung und in einem Fein-Schleifgang mit einer pulverförmigen Verbindung, deren Teilchengrösse kleiner als diejenige der in dem Vor-Schleifgang verwendeten Verbindung ist, geschliffen wird,
**dadurch gekennzeichnet**,
daß der Fein-Schleifgang unter Anwendung einer pulverförmigen Verbindung mit einer VICKERS-Härte Hv von mindestens 2.000 kp/mm² ausgeführt wird und daß die Verbindung beim Schleifen auf den Flächenabschnitt mit einer gleichmässigen Flächenpressung im Bereich von 2 bis 20 p/cm² aufgedrückt wird.

2. Verfahren nach Anspruch 1,
**dadurch gekennzeichnet**,
daß die in dem Fein-Schleifgang verwendete pulverförmige Verbindung eine maximale Teilchengrösse von nicht über 15 µ hat, wobei zumindest 50 % oder mehr der Gesamtmenge an pulverförmigem Material eine mittlere Teilchengrösse im Bereich von 1 bis 7 µ hat.

3. Verfahren nach Anspruch 1 oder 2,
**dadurch gekennzeichnet**,
daß die pulverförmige Verbindung ein Schleif- oder Poliermittel wie Aluminiumoxid, Siliciumkarbid, Siliciumnitrid oder Titankarbid ist.

4. Verfahren nach einem der Ansprüche 1 bis 3,
**dadurch gekennzeichnet**,
daß der Vor-Schleifgang einen ersten und einen zweiten Vor-Schleifgang umfasst, wobei die Teilchengrösse der in dem ersten Vor-Schleifgang verwendeten pulverförmigen Verbindung grösser als die Teilchengrösse der in dem zweiten Vor-Schleifgang verwendeten pulverförmigen Verbindung ist.

5. Verfahren nach einem der Ansprüche 1 bis 4,
**dadurch gekennzeichnet**,
daß die Verbindung mittels einer Schwabbelscheibe auf den Flächenabschnitt aufgedrückt wird.

6. Verfahren nach Anspruch 5,
**dadurch gekennzeichnet**,
daß die Schwabbelscheibe eine Urethanschaum-Schwabbelscheibe ist.

7. Verfahren nach Anspruch 5 oder 6,
**dadurch gekennzeichnet**,
daß in dem Fein-Schleifgang die Verbindung mittels einer rotierenden Schwabbelscheibe auf den Flächenabschnitt aufgedrückt wird.

8. Verfahren nach einem der Ansprüche 1 bis 7,
**dadurch gekennzeichnet**,
daß das pulverförmige Material in einer flüssigen oder pastenförmigen Zusammensetzung enthalten ist.

## Revendications

1. Procédé de réparation d'une partie abîmée de surface du revêtement d'un substrat revêtu, comprenant le frottement de la partie de surface dans une étape de frottement par une composition en poudre et dans une étape de frottement de finition par une composition en poudre dont la dimension particulaire est inférieure à celle de la composition utilisée dans l'étape de frottement par une composition,
caractérisé en ce que l'étape de frottement de finition est exécutée avec une composition en poudre qui a une dureté Vickers Hv d'au moins 2.10¹⁰ Pa (2 000 kg/mm²), et par application d'une pression à la composition, pendant le frottement, sur la partie de surface avec une pression superficielle uniforme comprise entre 2.10² et 2.10³ Pa (2 à 20 g/cm²).

2. Procédé selon la revendication 1, caractérisé en ce que la composition en poudre utilisée dans l'étape de frottement de finition ont une dimension particulaire maximale qui ne dépasse pas 15 µm, et 50 % au moins de la quantité totale de matière en poudre a une dimension particulaire comprise entre 1 et 7 µm.

3. Procédé selon la revendication 1 ou 2, caractérisé en ce que la composition en poudre est formée d'un abrasif ou d'un agent de polissage contenant de l'alumine, du carbure de silicium, du nitrure de silicium ou du carbure de titane.

4. Procédé selon l'une quelconque des revendications 1 à 3, caractérisé en ce que l'étape de frottement par une composition comprend une première étape de frottement par une composition et une seconde étape de frottement par une composition, dans lequel la dimension particulaire de la composition en poudre utilisée dans la première étape de frottement par une composition est supérieure à la dimension particulaire de la composition en poudre utilisée dans la seconde étape de frottement par une composition.

5. Procédé selon l'une quelconque des revendications 1 à 4, caractérisé en ce que la composition est appliquée à force sur la partie de surface avec un organe de polissage.

6. Procédé selon la revendication 5, caractérisé en ce que l'organe de polissage est un organe de mousse d'uréthanne.

7. Procédé selon la revendication 5 ou 6, caractérisé en ce que, au cours de l'étape de frottement de finition, la composition est repoussée contre la partie de surface avec un organe rotatif de polissage.

8. Procédé selon l'une quelconque des revendications 1 à 7, caractérisé en ce que la matière en poudre est contenue dans une composition liquide ou en pâte.
